# EUROPÄISCHE PATENTSCHRIFT

(11) **EP 1 595 797 B1**
(45) Veröffentlichungstag und Bekanntmachung des Hinweises auf die Patenterteilung: **14.03.2007**
(21) Anmeldenummer: 05009438.2
(22) Anmeldetag: 29.04.2005
(51) Int. Cl.: B65B 43/52, B65B 35/24, B65G 47/88, B65G 47/08

(54) **Verpackungsmaschine und Verfahren zum Zuführen von Behältern in einer Verpackungsmaschine**
Packaging machine and method of feeding containers in a packaging machine
Machine d'emballage et procédé d'alimentation de récipients dans une machine d'emballage

(30) Priorität: 12.05.2004 DE 102004023473
(43) Veröffentlichungstag der Anmeldung: 16.11.2005
(73) Patentinhaber: Multivac Sepp Haggenmüller GmbH & Co. KG, 87787 Wolfertschwenden (DE)
(72) Erfinder: Natterer, Johann, 87764 Legau (DE)
(74) Vertreter: Hofer, Dorothea

(56) Entgegenhaltungen:
- DE-A1- 4 002 724
- DE-A1- 4 207 725
- GB-A- 1 412 679
- US-A- 3 178 007
- US-A- 3 335 841
- US-A- 4 934 509
- US-A- 5 547 004

## Beschreibung

Die vorliegende Erfindung betrifft eine Verpackungsmaschine und ein Verfahren zum Zuführen von Behältern in einer Verpackungsmaschine.

Es sind Verpackungsmaschinen, sogenannte Schalenverschließmaschinen, bekannt, bei denen Produkte in vorgefertigte schalenförmige Behälter verpackt und mit einer Folie verschlossen werden.

Aus der DE 690 03 503 ist eine Verpackungsmaschine bekannt, bei der die Verpackungsbehälter von einer Befüllstation mittels umlaufender Mitnehmer auf eine Platte in eine Siegelstation befördert werden. Nachteilig ist, dass die Platzierung der Behälter sehr ungenau erfolgt und viel Zeit in Anspruch nimmt, da die Beschleunigung gering bleiben muss und die Mitnehmer aus dem Bereich der Siegelstation wieder zurückfahren müssen.

Aus der EP 680 880 ist eine Maschine bekannt, bei der die Behälter mit Schieberarmen von einer Zuführeinheit direkt in eine Verschließeinrichtung (Siegelstation) befördert werden und gleichzeitig die verschlossenen Behälter aus der Verschließeinrichtung abtransportiert werden. Auch hier werden die Behälter in der Siegelstation auf Platten platziert und die Platzierung ist ungenau und der Transport nimmt viel Zeit in Anspruch. Es sind weiterhin Detektoren offenbart, die die Behälter bei der Zuführung detektieren und die Bewegung eines Förderbands wird basierend auf der Detektion gesteuert.

Bei diesen Verpackungsmaschinen ist nachteilig, dass keine schnelle und genaue Platzierung von Behältern in einer Arbeitsstation der Verpackungsmaschine erfolgen kann und ein Umrüsten auf unterschiedliche Behältergrößen und -geometrien aufwendig ist.

Aus der EP 09 59 028 A2 ist eine Gruppiervorrichtung bei einer Stauförderbahn beschrieben. Auf der Stauförderbahn werden Behälter in einem Staubereich in einem Abstand voneinander angehalten, wobei für die einzelnen Haltepositionen separate Sensoren vorgesehen sind. Die Gruppiervorrichtung ist für eine feste Behältergröße bzw. einen festen Abstand der Behälter ausgebildet und ein Umrüsten auf andere Behältergrößen bzw. Abstände erfordert einen großen Aufwand.

Die US 5,547,004 offenbart ein Verfahren zum Anordnen einer Folge von Produkten, die sich aufeinander folgend in einer Transportrichtung auf einem Förderband bewegen, derart, dass sie in Takt mit einer stromabwärtig angeordneten Verarbeitungseinheit gelangen. Zum Ansteuern eines Aktivierungselements zum Anordnen der Produkte werden eine Produktgeschwindigkeit vor dem Element, eine Produktgeschwindigkeit nach dem Element, die Position der Verarbeitungseinheit und die Position des Elements gemessen.

Die US 4,934,509 offenbart eine Vorrichtung zum Weiterleiten eines durch ein Endlosförderer transportierten Produkts auf eine Aufnahmeoberfläche. Die Vorrichtung beinhaltet zwei flexible Endlos-Elemente, die jeweils zumindest ein Schieberelement zum Steuern der Bewegung der Produkte entlang des Förderers, Sensorelemente zum Detektieren der Ankunft und der Abgabe des Produktes an dem Förderer und die Aufnahmeoberfläche.

Aus der US 1,367,081 ist eine Bahn bekannt, die zum Zuführen von Behältern zu einem Aufzug dient. Bei dieser Bahn werden direkt aufeinander folgende Behälter voneinander beabstandet. Eine sichere und exakte Gruppierung ist nicht ermöglicht.

Es ist Aufgabe der vorliegenden Erfindung, eine Verpackungsmaschine zu schaffen, die es ermöglicht, Behälter sicher mit hoher Geschwindigkeit zu gruppieren und einer folgenden Arbeitsstation zuzuführen und dabei eine leichte Umrüstbarkeit der Verpackungsmaschine auf unterschiedliche Behältergrößen und -geometrien zu gewährleisten und ein Verfahren bereitzustellen, das diese Vorteile ermöglicht.

Die Aufgabe wird gelöst durch eine Verpackungsmaschine gemäß Anspruch 1 und durch ein Verfahren nach Anspruch 6. Weiterbildungen der Erfindung sind in den Unteransprüchen gekennzeichnet.

Die erfindungsgemäße Verpackungsmaschine weist den Vorteil auf, dass das Gruppieren und der Transport der Behälter zu der Arbeitsstation sehr schnell erfolgen kann. Weiterhin wird eine genaue Positionierung der Behälter erreicht.

Ein weiterer Vorteil der vorliegenden Erfindung ist, dass die Verpackungsmaschine sehr einfach auf unterschiedliche Behältergrößen und -formen umzustellen ist und insbesondere bei nur unterschiedlicher Behälterhöhe keine Umstellungen nötig sind.

Weiterhin kann bei der erfindungsgemäßen Verpackungsmaschine aufgrund der kontinuierlich laufenden Zuführeinrichtung auf eine aufwendige Taktung der Zuführeinrichtung verzichtet werden, die bei einer intermittierend arbeitenden Zuführeinrichtung nötig ist.

Weitere Merkmale und Zweckmäßigkeiten der Erfindung ergeben sich aus der Beschreibung von Ausführungsbeispielen anhand der beigefügten Zeichnungen. Von den Figuren zeigen:
- Fig. 1: eine schematische Draufsicht auf eine Verpackungsmaschine gemäß einer Ausführungsform der vorliegenden Erfindung;
- Fig. 2: eine schematische Seitenansicht einer Verpackungsmaschine nach der ersten Ausführungsform;
- Fig. 3: einen vergrößerten Ausschnitt der Verpackungsmaschine aus Fig. 2 von oben;
- Fig. 4: eine Draufsicht auf eine Verpackungsmaschine gemäß einer zweiten Ausführungsform in einem ersten Arbeitsschritt;
- Fig. 5: eine Draufsicht auf die Verpackungsmaschine von Fig. 4 in einem zweiten Arbeitsschritt;
- Fig. 6: eine Draufsicht auf die Verpackungsmaschine von Fig. 4 in einem dritten Arbeitsschritt.

### Erste Ausführungsform

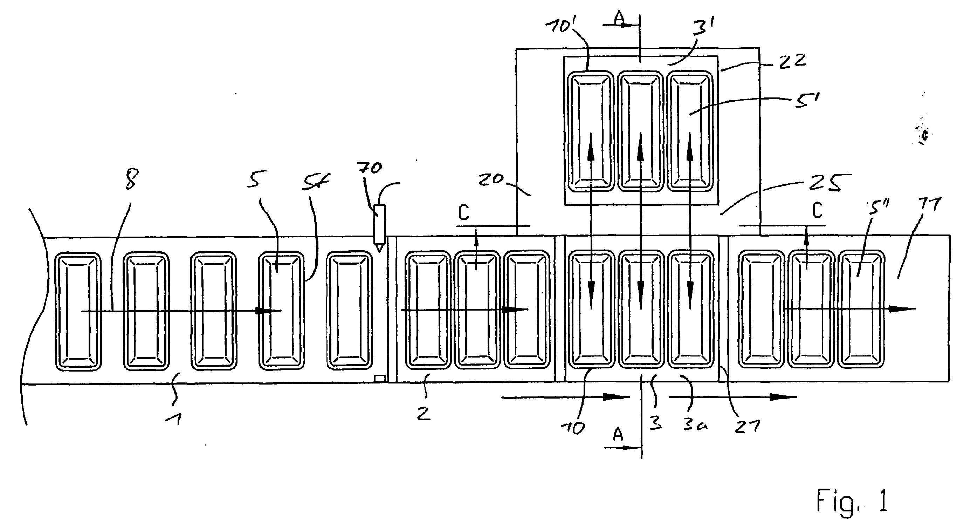

Im Folgenden wird mit Bezug auf die Fig. 1 bis 3 eine erste Ausführungsform der vorliegenden Erfindung beschrieben.

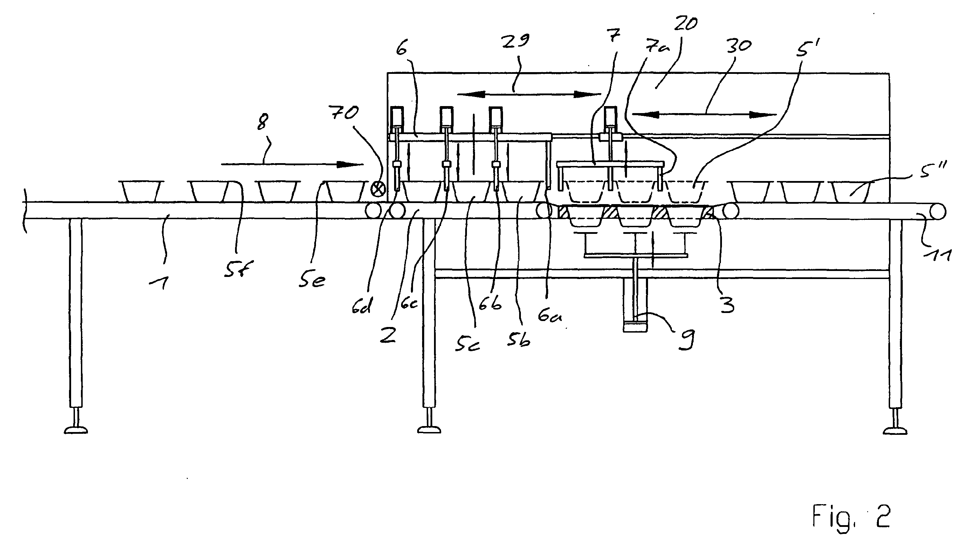

Wie in Fig. 1 und 2 gezeigt ist, beinhaltet die Verpackungsmaschine dieser Ausführungsform ein erstes Zuführförderband 1, auf dem zu verschließende Behälter 5 in Richtung einer Verschließstation 20 transportiert werden, ein zweites Zuführförderband 2, das in dem Eingangsbereich der Verschließstation 20 angeordnet ist und auf dem die Behälter 5 gruppiert werden, sowie ein Abführförderband 11, auf dem die Behälter 5" nach ihrer Verarbeitung in der Verschließstation 20 weitertransportiert werden. Die Verschließstation 20 ist so ausgebildet, dass eine Gruppe von Behältern 5 gleichzeitig verarbeitet werden kann.

Über das erste Zuführförderband 1, das zweite Zuführförderband 2 und das Abführförderband 11 bewegen sich die Behälter in einer Haupttransportrichtung 8, die in Fig. 2 durch einen Pfeil gekennzeichnet ist und von links nach rechts verläuft. Die Zuführförderbänder 1, 2 laufen jeweils kontinuierlich und das Gruppieren der Behälter erfolgt über eine Mehrzahl von Stoppern 6a bis 6d, die über dem zweiten Zuführförderband 2 angeordnet sind.

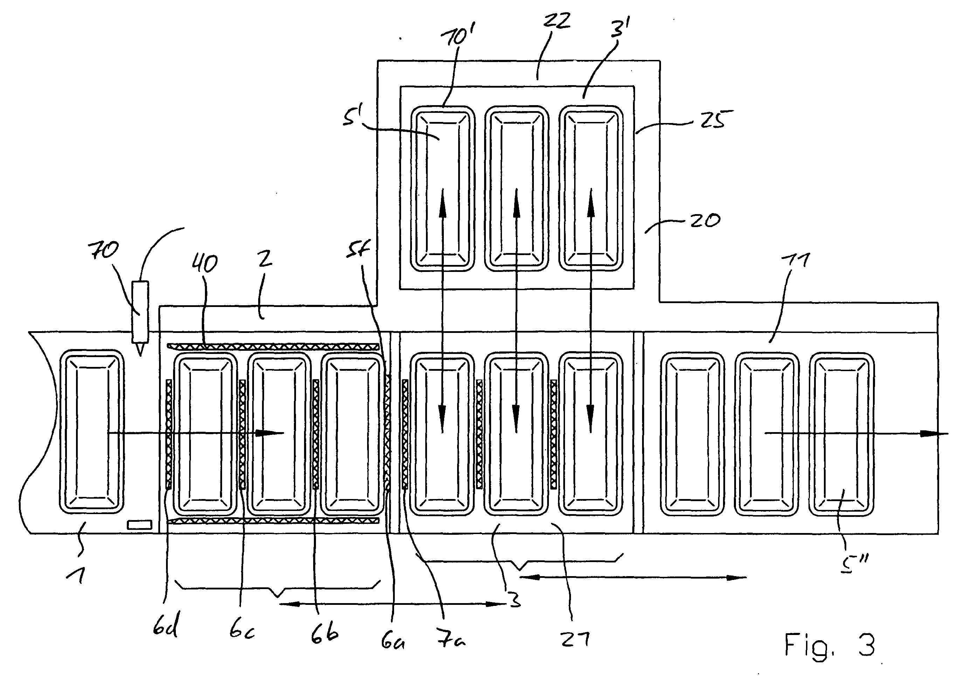

Der erste Stopper 6a, der sich am nächsten an der Verschließstation 20 befindet, ist derart angeordnet, dass er einen auf dem zweiten Zufuhrförderband 2 in Haupttransportrichtung 8 bewegten Behälter 5 anhält, während sich das zweite Zuführförderband unter ihm hindurch weiterbewegt. Die weiteren Stopper 6b, 6c, 6d sind derart ausgebildet, dass sie einzeln aus einer angehobenen Position, in der die Behälter 5 auf dem zweiten Zuführförderband 2 unter ihnen hindurch transportiert werden können, in eine abgesenkte Position bewegt werden können, in der sie auf dem zweiten Zuführförderband 2 in Haupttransportrichtung 8 transportierte Behälter 5 anhalten während sich das zweite Zuführförderband 2 unter ihnen hindurch weiterbewegt. Weiter sind die Stopper 6 derart ausgebildet, dass sie in der Haupttransportrichtung 8 durch eine nicht dargestellte Steuereinrichtung hin und herbewegt werden können (29). Wie in Fig. 2 und Fig. 3 gezeigt ist, sind die Stopper 6a-6d in der ersten Ausführungsform durch Platten gebildet, die von oben über das zweite Zuführförderband 2 ragen und sich senkrecht zur Haupttransportrichtung 8 erstrecken. Das Stoppen der auf dem zweiten Zuführförderband 2 transportierten Behälter 5 erfolgt dadurch, dass die Behälter 5 bei ihrer Bewegung mit ihrer vorderen Kante 5f an den Stoppern 6a-6d anstoßen und dadurch von diesen gehalten werden.

Es ist weiterhin in der Haupttransportrichtung 8 eingangsseitig an dem zweiten Zuführförderband 2 ein Sensor 70 vorgesehen, der das Herantransportieren eines Behälters 5 von dem ersten Zuführförderband 1 zu dem zweiten Zuführförderband 2 detektiert. Ausgehend von dem Detektionszeitpunkt eines herantransportierten Behälters 5 und der bekannten Transportgeschwindigkeit des kontinuierlich und gleichmäßig in Richtung der Verschließstation 20 transportierenden zweiten Zuführförderbands 2 wird von der oben genannten Steuereinrichtung der Zeitpunkt bestimmt, zu dem der nächstfolgende Stopper 6b-6d in den Haupttransportweg der Behälter 5 bewegt werden muss.

Wie in Fig. 3 dargestellt ist, sind seitlich über dem zweiten Zuführförderband 2 Führungsplatten 40 zur seitlichen Ausrichtung der Behälter 5 senkrecht zur Haupttransportrichtung 8 angeordnet.

Im Haupttransportweg hinter dem zweiten Zuführförderband 2 befindet sich in der Verschließstation 20 ein Platz für eine Aufnahmeplatte 3, der als erste Position 21 bezeichnet wird. Die Aufnahmeplatte 3 ist in der ersten Position 21 derart angeordnet, das die von den Stoppern 6a-6d auf dem zweiten Zuführförderband 2 gestoppten Behälter 5 durch eine Bewegung der abgesenkten Stopper 6a-6d in die Haupttransportrichtung 8 über die Aufnahmeplatte 3 geschoben werden können. In der Aufnahmeplatte 3 sind Ausnehmungen 10 vorgesehen, in die die über die Aufnahmeplatte 3 geschobenen Behälter 5 mithilfe einer unter der Aufnahmeplatte 3 vorgesehenen Hebevorrichtung 9 abgesenkt werden können. Die abgesenkten Behälter 5 werden dann mit dem oberen Behälterrand 5e von der Aufnahmeplatte 3 gehalten. Es ist in der Aufnahmeplatte 3 mindestens eine Anzahl von Ausnehmungen 10 vorgesehen, die der Anzahl der Behälter 5 pro Gruppe entspricht. Die Behälter 5 können auch einfach ohne Verwendung der Hebevorrichtung 9 in die Ausnehmungen 10 fallen gelassen werden.

In der ersten Position 21 können versiegelte Behälter 5" mithilfe der Hebevorrichtung 9 in den Ausnehmungen 10 der Aufnahmeplatte 3 angehoben werden, sodass die Behälterböden 5a mit der Oberseite 3a der in der ersten Position 21 befindlichen Aufnahmeplatte 3 fluchten. Es ist ein Schieber 7 vorgesehen, der durch von oben herunterragende Mitnehmer 7a gebildet ist, die derart ausgebildet sind, dass sie in einer ersten Stellung, wie in Fig. 2 dargestellt ist, zwischen die versiegelten Behälter 5" greifen. Durch Verschieben des Schiebers 7 in Richtung der Haupttransportrichtung 8 in eine zweite Stellung (rechtes Ende des Pfeils 30 in Fig. 2) werden die versiegelten Behälter 5" auf das Abführförderband 11 verschoben.

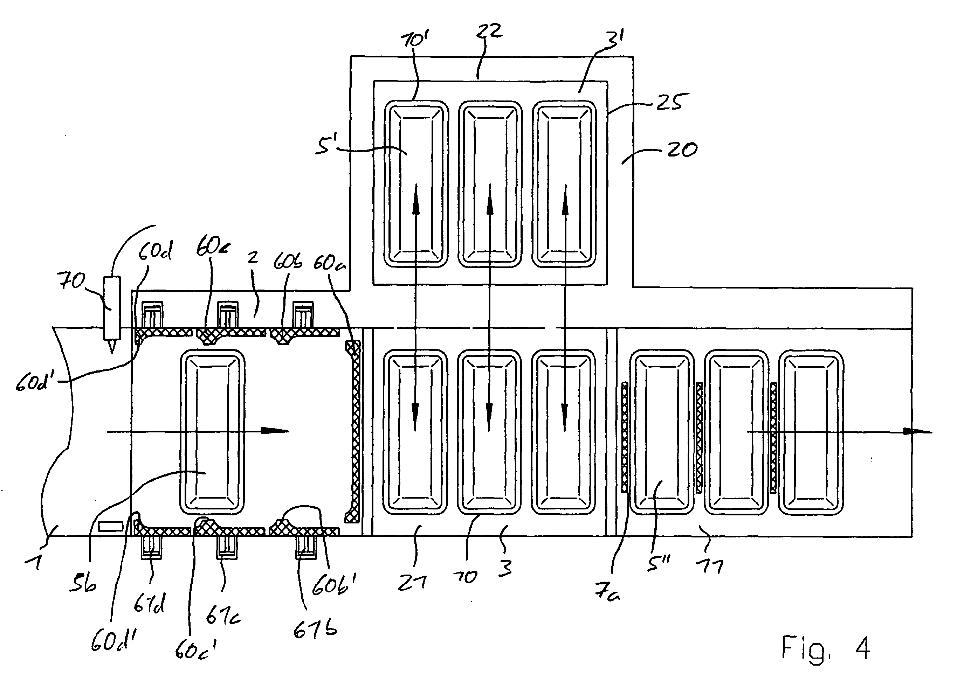

Im Folgenden wird die Verschließstation 20 näher beschrieben. Wie in Fig. 4 gezeigt ist, befindet sich in der Verschließstation 20 an einem Platz, der als zweite Position 22 bezeichnet wird, eine zweite Aufnahmeplatte 3' mit Ausnehmungen 10', die identisch zu der Aufnahmeplatte 3 ausgebildet ist. Die zweite Position 22 ist seitlich der Haupttransportrichtung 8 und oberhalb der ersten Position 21 angeordnet.

Es ist ein nicht dargestellter Transportmechanismus vorgesehen mit dem die Aufnahmeplatten 3, 3' von der ersten Position 21 über eine zweite Zwischenposition in die zweite Position 22 bzw. von der zweiten Position 22 über eine erste Zwischenposition in die erste Position 21 bewegt werden können. Diese Bewegung von der ersten Position 21 in die zweite Position 22 bzw. zurück ist jeweils über zwei nacheinander erfolgende Linearbewegungen realisiert.

In der zweiten Position 22 befindet sich die Aufnahmeplatte 3' zwischen einem Oberteil und einem Unterteil einer nicht genauer dargestellten Verschließeinrichtung. Das Unterteil kann mithilfe einer Hebeeinrichtung nach oben bewegt werden, sodass das Unterteil mit dem Oberteil und der dazwischengepressten Aufnahmeplatte 3' eine geschlossene Kammer ausbildet. An dieser Verschließeinrichtung sind dann noch Vorrichtungen vorgesehen, die ein Evakuieren und ein Einleiten von Gas, wie z.B. einem Inertgas, ermöglichen.

Es ist eine Oberfolie im Bereich der Verschließeinrichtung derart angeordnet, dass ein Abschnitt der Oberfolie beim Schließen der Verschließeinrichtung zwischen dem Oberteil und der Aufnahmeplatte 3' eingeschlossen wird, sodass dieser Abschnitt auf den oberen Behälterrändern 5e der in den Ausnehmungen 10' der Aufnahmeplatte 3' gehaltenen Behältern 5' aufliegt.

Die Oberseite der Aufnahmeplatte 3' und das Oberteil sind derart ausgebildet, dass sie ein Siegel- und Schneidewerkzeug bilden, das die Oberfolie auf die oberen Behälterränder 5e aufschweißt und dabei den verschweißten Bereich aus der Oberfolie freischneidet. Die Verschließeinrichtung ist weiterhin derart ausgebildet, dass sie sich nach dem Versiegeln der Behälter 5' wieder öffnet und ein nächster Abschnitt der Oberfolie in die Verschließeinrichtung bewegt wird.

Im Folgenden wird Bezug nehmend auf die Fig. 1 bis 3 der Betrieb der Verpackungsmaschine dieser Ausführungsform beschrieben. Im Betrieb werden auf dem ersten Zuführförderband 1 unregelmäßig beabstandete Behälter 5 in Richtung des zweiten Zuführförderbands 2 transportiert. Die Behälter 5 sind bereits mit zu verpackenden Produkten befüllt. Das Befüllen kann auf dem ersten Zuführförderband 1 oder auch bereits vor diesem erfolgen. Von dem ersten Zuführförderband 1 werden die Behälter 5 an das zweite Zuführförderband 2 übergeben. Dabei werden die jeweiligen Behälter 5 von dem Sensor 70 detektiert, der eingangsseitig an dem zweiten Zuführförderband 2 vorgesehen ist.

Der erste Behälter 5b wird auf dem zweiten Zuführförderband 2 in Haupttransportrichtung 8 transportiert bis er an den ersten Stopper 6a anstößt, der seine Weiterbewegung verhindert. Dabei ist er in seiner Seitenausrichtung senkrecht zur Haupttransportrichtung 8 durch die Führungsplatten 40 geführt. Das zweite Zuführförderband 2 bewegt sich unter dem gehaltenen ersten Behälter 5b hindurch weiter. Hinter dem ersten Behälter bewegt sich dann der nächste Stopper 6b nach unten. Der Zeitpunkt des nach unten Bewegens wird von der Steuereinrichtung aus dem Zeitpunkt, zu dem der Sensor 70 das Transportieren eines Behälters 5 von dem ersten Zuführförderband 1 zu dem zweiten Zuführförderband 2 detektiert, und der Transportgeschwindigkeit des zweiten Zuführförderbands 2 bestimmt.

Der nächste Behälter 5c wird von dem ersten Zuführförderband 1 kommend auf dem zweiten Zuführförderband 2 solange in Haupttransportrichtung 8 mitbewegt, bis er an dem Stopper 6b anstößt. Danach wird der folgende Stopper 6c zu einem Zeitpunkt gemäß dem Detektieren mit dem Sensor 70 und der Transportgeschwindigkeit des zweiten Zuführförderbands 2 nach unten bewegt und der Vorgang wiederholt sich, bis eine voreingestellte Anzahl von Behältern 5 gruppiert ist. In den Fig. 1 bis 3 ist jeweils eine Anzahl von drei Behältern pro Gruppe dargestellt, es kann jedoch auch eine andere Anzahl realisiert werden. Über den Abstand der Stopper voneinander wird der Abstand der Behälter 5 einer Gruppe zueinander eingestellt.

Anschließend werden die Stopper 6a-6d in Haupttransportrichtung 8 bewegt (Pfeil 29 nach rechts) und die gruppierten Behälter 5 über eine in der Position 21 befindliche Aufnahmeplatte 3 bewegt. Gleichzeitig werden auf der Aufnahmeplatte 3 befindliche versiegelte Behälter 5" von dem Schieber 7 auf das Abführförderband 11 bewegt. Die gruppierten Behälter 5, die über die Aufnahmeplatte 3 bewegt wurden, werden mit der Hebevorrichtung 9 in die Ausnehmungen 10 der Aufnahmeplatte 3 abgesenkt oder in ohne Verwendung der Hebevorrichtung 9 in die Ausnehmungen fallen gelassen und in dieser dann durch den oberen Rand 5e der Behälter 5 gehalten. Während der Zeit, in der die versiegelten Behälter 5" von dem Schieber auf das Abführförderband 11 bewegt werden und die gruppierten Behälter 5 in die Ausnehmungen 10 der Aufnahmeplatte 3 bewegt werden, werden auf der Aufnahmeplatte 3' befindliche Behälter 5' in der Verschließeinrichtung 25 versiegelt.

Nachdem der Siegelvorgang in der Verschließeinrichtung 25 abgeschlossen ist und die zu verschließenden Behälter 5 in den Ausnehmungen 10 der Aufnahmeplatte 3, die sich in der ersten Position 21 befindet, platziert wurden, wird die Verschließeinrichtung 25 geöffnet, indem das Unterteil 24 mit einer nicht gezeigten Hebeeinrichtung abgesenkt wird. Daran anschließend wird die Aufnahmeplatte 3' linear in vertikaler Richtung aus der zweiten Position 22, die seitlich der Haupttransportrichtung 8 und höher als die erste Position 21 angeordnet ist, auf die Höhe der ersten Position 21 in eine erste Zwischenposition abgesenkt. Gleichzeitig wird die andere Aufnahmeplatte 3 linear in vertikaler Richtung aus der ersten Position 21 in eine zweite Zwischenposition angehoben. Anschließend wird die Aufnahmeplatte 3', die versiegelte Behälter 5" enthält, linear in horizontaler Richtung aus der ersten Zwischenposition in die erste Position 21 bewegt. Gleichzeitig wird die Aufnahmeplatte 3 mit den unversiegelten Behältern 5 aus der zweiten Zwischenposition linear in horizontaler Richtung in die zweite Position 22 in der Verschließeinrichtung 25 bewegt, sodass die Aufnahmeplatten 3, 3' ihre Position vertauscht haben.

Nachfolgend wird die Verschließeinrichtung 25 verschlossen und die Behälter 5' auf der darin befindlichen Aufnahmeplatte 3 werden mit der Oberfolie versiegelt und die Verschließeinrichtung öffnet sich anschließend wieder. Gleichzeitig werden die versiegelten Behälter 5" in der Aufnahmeplatte 3' in der ersten Position 21 mit der Hebevorrichtung 9 angehoben und mit dem Schieber 7 auf das Abführförderband 11 bewegt, während auf dem zweiten Zuführförderband 2 in der Zwischenzeit gruppierte Behälter 5 mit den Stoppern 6a-6d über die Aufnahmeplatte 3' bewegt werden und diese anschließend mit der Hebevorrichtung 9 in die Ausnehmungen 10' der Aufnahmeplatte 3' abgesenkt werden oder in diese fallen gelassen werden.

Wenn der Siegelvorgang in der Verschließeinrichtung 25 beendet ist und die nachkommenden gruppierten Behälter 5 in den Ausnehmungen 10' platziert wurden, wird die Aufnahmeplatte 3' aus der ersten Position 21 über die zweite Zwischenposition in die zweite Position 22 bewegt und gleichzeitig die andere Aufnahmeplatte 3 aus der zweiten Position 22 über die erste Zwischenposition in die erste Position 21 bewegt. Nachfolgend wiederholen sich die beschriebenen Vorgänge, sodass nacheinander weitere Behälter 5 versiegelt werden.

### Zweite Ausführungsform

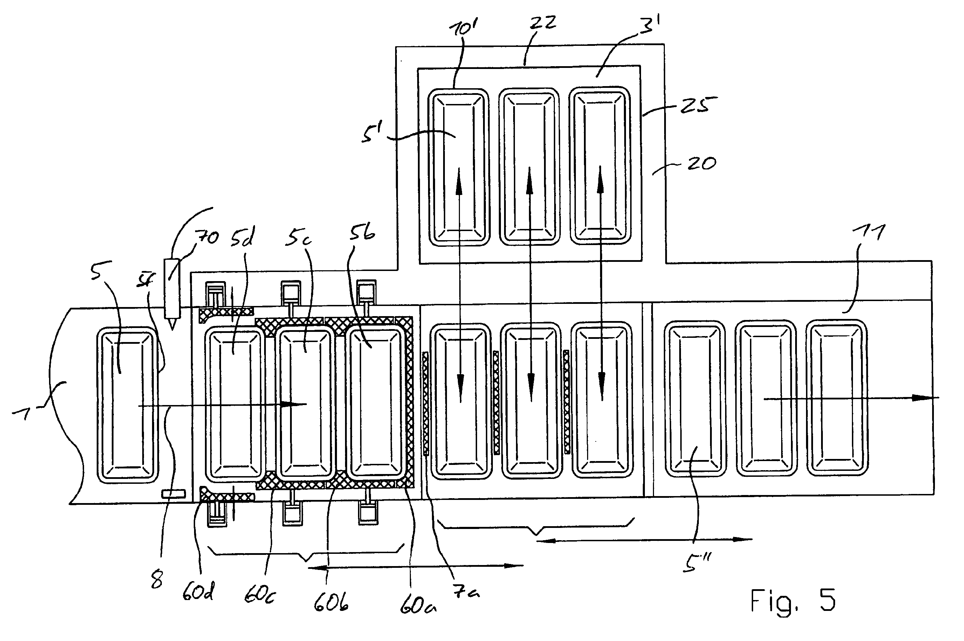

Anhand der Fig. 4 bis 6 wird im Folgenden eine zweite Ausführungsform der vorliegenden Erfindung beschrieben.

Wie in den Fig. 4 bis 6 dargestellt ist, unterscheidet sich die zweite Ausführungsform der vorliegenden Erfindung nur in der Ausbildung der Stopper von der in den Fig. 2 und 3 gezeigten ersten Ausführungsform. Die restlichen Komponenten entsprechen denen der ersten Ausführungsform und werden deshalb nicht noch einmal beschrieben. Insbesondere werden für gleiche Komponenten die gleichen Bezugszeichen verwendet.

In der zweiten Ausführungsform sind statt der Stopper 6a-6d Stopper 60a-60d vorgesehen. Die Anordnung des Stoppers 60a entspricht der des Stoppers 6a und die Stopper 60b-60d unterscheiden sich von den Stoppern 6b-6d darin, dass sie von der Seite in den Haupttransportweg der auf dem zweiten Zuführförderband 2 transportierten Behälter 5 eingreifen und gleichzeitig die Funktion der Führungsplatten 40 der ersten Ausführungsform mitübernehmen. Die Stopper 60b-60d sind jeweils als zwei vertikale Platten ausgebildet, die sich seitlich parallel zu dem zweiten Zuführförderband 2 erstrecken und in Richtung des Haupttransportwegs der Behälter 5 vorstehende Abschnitte 60b'-60d' aufweisen. Die Stopper 60b-60d sind über seitlich angeordnete Steuereinrichtungen 61b-61d in Richtung senkrecht zur Haupttransportrichtung 8 horizontal bewegbar.

Anhand der Fig. 4 bis 6 wird nun der Betrieb der Gruppierungseinrichtung der zweiten Ausführungsform beschrieben. Wie in Fig. 4 dargestellt ist, bewegt sich zuerst ein erster Behälter 5b in der Hauptbewegungsrichtung 8 auf dem zweiten Zuführförderband 2 zwischen den nach außen bewegten Stoppern 60b-60d hindurch bis er an den ersten Stopper 60a anstößt und von diesem gehalten wird, während sich das zweite Zuführförderband 2 unter ihm hindurch weiterbewegt. Daran anschließend bewegen sich die Platten des zweiten Stoppers 60b nach innen über das zweite Zuführförderband 2 und zentrieren dabei den ersten Behälter 5b in der seitlichen Richtung senkrecht zur Hauptbewegungsrichtung 8. Der Zeitpunkt des nach innen Bewegens wird wie bei der ersten Ausführungsform aus dem Zeitpunkt des Detektierens eines Behälters 5 durch den Sensor 70 und aus der Transportgeschwindigkeit des zweiten Zuführförderbands 2 bestimmt. Die vorstehenden Abschnitte 60b' des zweiten Stoppers ragen dann über das zweite Zuführförderband 2 und ein nachfolgend auf dem zweiten Zuführförderband 2 transportierter zweiter Behälter 5c wird von den vorstehenden Abschnitten 60b' gestoppt, während das zweite Zuführförderband unter ihm hindurch weiterläuft. Anschließend werden die beiden Platten des dritten Stoppers 60c zu einem Zeitpunkt, der gemäß der Detektion eines Behälters durch den Sensor 70 und die Transportgeschwindigkeit des zweiten Zuführförderbands 2 bestimmt ist, nach innen über das zweite Zuführförderband 2 bewegt und dabei der zweite Behälter 5c in der Richtung senkrecht zur Haupttransportrichtung 8 zentriert.

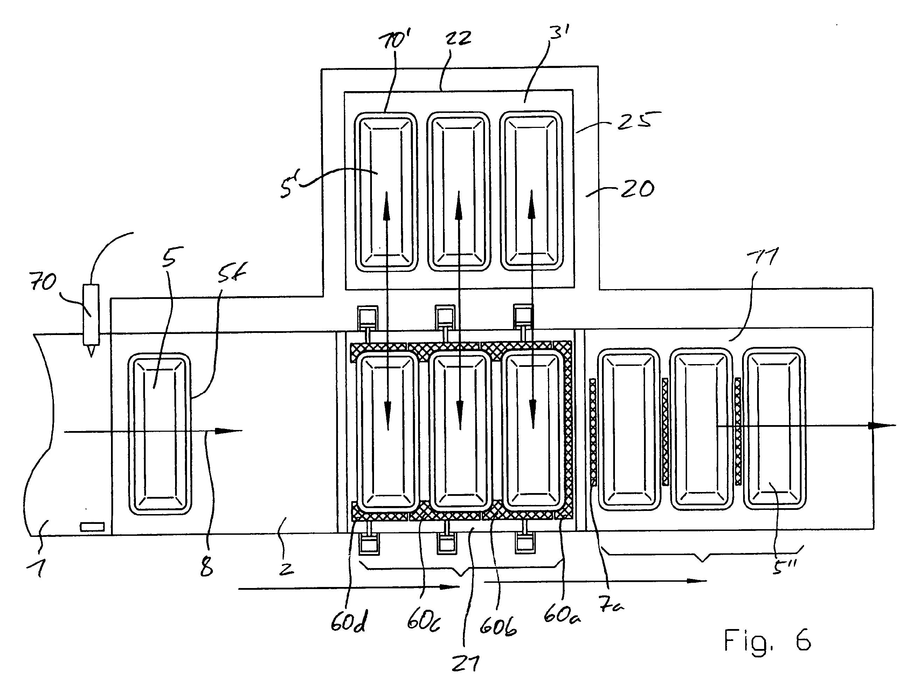

Dieser Vorgang wiederholt sich bis eine voreingestellte Anzahl von Behältern 5 erreicht ist, die eine Gruppe bilden. In der in den Fig. 4 bis 6 dargestellten Ausführungsform bilden drei Behälter eine Gruppe, es können aber auch mehr oder weniger sein. Wie in Fig. 6 gezeigt ist, wird die gesamte Gruppe anschließend von den Stoppern 60a-60d auf die Aufnahmeplatte 3 bewegt und die Stopper 60b-60d werden wieder nach außen gefahren. Anschließend werden alle Stopper 60a-60d zurück in ihre Position über dem zweiten Zuführförderband 2 bewegt.

Der weitere Betrieb der zweiten Ausführungsform entspricht dann wieder dem der ersten Ausführungsform.

Es ist bei den beschriebenen Ausführungsformen selbstverständlich auch möglich, mehr oder weniger Behälter zu einer Gruppe zusammen zu fassen. Insbesondere können bei einer Stoppervorrichtung, die ähnlich der der ersten Ausführungsform ausgebildet ist, auch mehrere Behälter nebeneinander gruppiert werden.

Für die Form der einzelnen Stopperelemente sind auch weitere unterschiedliche Formen denkbar.

Besonders vorteilhaft ist es, dass ein einfaches Umstellen auf unterschiedliche Behältergrößen und -formen möglich ist.
Sollen z.B. nur Behälter unterschiedlicher Höhe verwendet werden, so ist keine Umstellung erforderlich, da die Stopperelemente 6a-6d bzw. 60a-60d durch von oben bzw. seitlich über die zweite Zuführfördereinrichtung 2 ragende Elemente gebildet sind, die nicht an spezielle Formen oder Größen der Behälter angepasst werden müssen und da weiterhin die Behälter 5, 5', 5" mit ihrem oberen Rand 5e in den Ausnehmungen 10, 10' gehalten werden und somit die Höhe des Flanschbereichs, in dem das Versiegeln durchgeführt wird, bei der Positionierung in der Verschließeinrichtung 25 unverändert ist. Soll die Verpackungsmaschine auf eine andere Behälterform umgestellt werden, so müssen bei der ersten Ausführungsform nur die Aufnahmeplatten 3, 3' und das Oberteil 23 der Verschließeinrichtung 25 ausgetauscht werden und sowohl das Unterteil 24 der Verschließeinrichtung als auch die Stopperelemente 6a-6d können beibehalten werden. Es kann also ein sehr einfaches und kostengünstiges Umstellen auf unterschiedliche Behältergrößen und -formen erfolgen. Wenn die Breite der Behälter 5 über einen größeren Bereich umgestellt werden soll, kann der Abstand der Stopperelemente zueinander einfach verändert werden, ohne die Stopperelemente selbst zu ändern.

Obwohl bei den beschriebenen Ausführungsformen die nachfolgende Arbeitsstation als eine Verschließstation (20) beschrieben wurde, bei der die Verschließeinrichtung (25) neben dem Haupttransportweg angeordnet ist, kann auch eine Verschließeinrichtung verwendet werden, die in dem Haupttransportweg angeordnet ist. Die Arbeitsstation ist auch nicht auf eine Verschließstation beschränkt, sondern kann auch eine andere Arbeitstation sein die bei der Verpackungsmaschine verwendet wird, es kann sich z.B. auch um eine Schneide- oder Stanzeinrichtung oder ähnliches handeln.

## Patentansprüche

1. Verpackungsmaschine mit einer Gruppiervorrichtung zum Gruppieren von Behältern mit
einer Zuführeinrichtung (2), die Behälter (5) einer Arbeitsstation (20) nacheinander mit vorbestimmter Geschwindigkeit zuführt,
einer Gruppiervorrichtung (6a-6d, 60a-60d), die Behälter auf der Zuführeinrichtung (2)gruppiert, wobei
die Gruppiervorrichtung aufweist:
ein Sensorelement (70)zum Detektieren der Zuführung der jeweiligen Behälter (5) und ein erstes Stopperelement (6a, 60a) zum Stoppen der Bewegung eines ersten Behälters
und wenigstens ein zweites Stopperelement (6b-6d, 60b-60d),
**dadurch gekennzeichnet, dass** das zweite Stopperelement zum Stoppen der Bewegung eines nachfolgenden Behälters unmittelbar hinter dem ersten Behälter zu einem Zeitpunkt bewegt wird, der aus dem Detektionszeitpunkt der Zuführung eines Behälters (5) und der Geschwindigkeit der Zuführeinrichtung (2) bestimmt wird, während die Zuführeinrichtung (2) weiter Behälter (5) zuführt.

2. Verpackungsmaschine nach Anspruch 1, bei der die Zuführeinrichtung ein kontinuierlich laufendes Förderband ist.

3. Verpackungsmaschine nach Anspruch 1 oder 2, bei der die Stopperelemente (6a-6d, 60a-60d) derart einstellbar sind, dass die Behälter (5) nach dem Gruppieren einen vorbestimmbaren Abstand zueinander aufweisen.

4. Verpackungsmaschine nach einem der Ansprüche 1 bis 3, bei der die Stopperelemente von oben oder seitlich in die Bewegung der Behälter (5) auf der Zuführeinrichtung (2) eingreifen.

5. Verpackungsmaschine nach einem der Ansprüche 1 bis 4, bei der die Stopperelemente (6a-6d, 60a-60d) zum Transportieren gruppierter Behälter (5) zu der Arbeitsstation (20) gemeinsam in Richtung der Arbeitsstation (20) bewegbar sind.

6. Verpackungsmaschine nach einem der Ansprüche 1 bis 5, bei der das zweite Stopperelement (6b-6d, 60b-60d) hinter dem ersten Behälter bewegt wird.

7. Verfahren zum Gruppieren von Behältern in einer Verpackungsmaschine mit den Schritten
- nacheinander Zuführen von Behältern (5) in Richtung einer Arbeitsstation (20) mit einer vorbestimmten Geschwindigkeit und Detektieren der Zuführung der jeweiligen Behälter (5) mit einem Sensorelement (70);
- Anhalten eines ersten Behälters mit einem ersten Stopperelement (6a, 60a) wobei die Zuführeinrichtung (2) weiter Behälter zuführt;
- Einbringen eines zweiten Stopperelements (6b, 60b) in die Bewegungsrichtung der Behälter,
**dadurch gekennzeichnet, dass** das zweite Stopperelement unmittelbar hinter dem ersten Behälter zu einem Zeitpunkt eingebracht wird, der aus dem Detektionszeitpunkt der Zuführung eines Behälters (5) und der Zuführgeschwindigkeit bestimmt wird.

8. Verfahren nach Anspruch 7 ferner mit einem Schritt des Anhaltens eines zweiten Behälters an dem zweiten Stopperelement (6b, 60b) wobei die Zuführeinrichtung (2) weiter Behälter (5) zuführt.

## Claims

1. Packaging machine with a grouping device for grouping containers comprising
a supply device (2) which supplies containers (5) consecutively with a predetermined speed to a working station (20),
a grouping device (6a-6d, 60a-60d) grouping containers on the supply device (2), wherein
the grouping device comprises:
a sensor element (70) for detecting the supply of the respective containers (5) and
a first stopper element (6a, 60a) for stopping the motion of a first container
and at least a second stopper element (6b-6d, 60b-60d) **characterised in that** the second stopper element, for stopping the motion of a subsequent container, is moved directly behind the first container at a time which is determined from the time of detection of the supply of a container (5) and from the speed of the supply device (2), while the supply device (2) keeps on supplying containers (5).

2. Packaging machine according to claim 1, wherein the supply device is a conveyor belt running continuously.

3. Packaging machine according to claim 1 or 2, wherein the stopper elements (6a-6d, 60a-60d) are adjustable such that the containers (5) have a pre-determinable distance relative to each other after grouping.

4. Packaging machine according to one of claims 1 to 3, wherein the stopper elements reach into the motion of the containers (5) on the supply device (2) from above or laterally.

5. Packaging machine according to one of claims 1 to 4, wherein the stopper elements (6a-6d, 60a-60d) are collectively movable in the direction towards the working station (20) for transporting grouped containers (5) to the working station (20).

6. Packaging machine according to one of claims 1 to 5, wherein the second stopper element (6b-6d, 60b-60d) is moved behind the first container.

7. Method for grouping containers in a packaging machine with the steps:
- consecutively supplying containers (5) in a direction towards a working station (20) with a predetermined speed and detecting the supply of the respective containers (5) with a sensor element (70);
- stopping a first container with a first stopper element (6a, 60a) while the supply device (2) keeps on supplying containers;
- introducing a second stopper element (6b, 60b) into the direction of movement of the containers;
**characterised in that** the second stopper element is introduced directly behind the first container at a time which is determined from the time of detection of the supply of a container (5) and from the supply speed.

8. Method according to claim 7, further with a step of stopping a second container at the second stopper element (6b, 60b) while the supply device (2) keeps on supplying containers (5).

## Revendications

1. Machine d'emballage comprenant un dispositif de groupage pour grouper des récipients, avec:
un dispositif d'alimentation (2), amenant les récipients (5) à un poste de travail (20) les uns après les autres, à une vitesse prédéterminée,
un dispositif de groupage (6a-6d, 60a-60d), groupant les récipients sur le dispositif d'alimentation (2), où
le dispositif de groupage présente:
un élément de capteur (70), pour détecter l'amenée des récipients (5) respectifs, et un premier élément d'arrêt (6a, 60a), pour stopper le mouvement d'un premier récipient
et au moins un deuxième élément d'arrêt (6b-6d, 60b-60d),
**caractérisé en ce que**
le deuxième élément d'arrêt pour stopper le mouvement d'un récipient suivant est déplacé directement derrière le premier récipient, à un moment déterminé à partir du moment de détection de l'amenée d'un récipient (5) et de la vitesse du dispositif d'alimentation (2), tandis que le dispositif d'alimentation (2) continue à amener des récipients (5).

2. Machine d'emballage selon la revendication 1, dans laquelle le dispositif d'alimentation est une bande transporteuse défilant en continu.

3. Machine d'emballage selon la revendication 1 ou 2, dans laquelle les éléments d'arrêt (6a-6d, 60a-60d) sont réglables de manière que les récipients (5), après groupage, présentent un espacement mutuel pouvant être prédéterminé.

4. Machine d'emballage selon la revendication 1 à 3, dans laquelle les éléments d'arrêt s'engagent par le haut ou par le côté dans le déplacement des récipients (5) sur le dispositif d'alimentation (2).

5. Machine d'emballage selon l'une des revendications 1 à 4, dans laquelle les éléments d'arrêt (6a-6d, 60a-60d), pour transporter des récipients (5) groupés au poste de travail (20), sont déplaçables conjointement dans la direction du poste de travail (20).

6. Machine d'emballage selon l'une des revendications 1 à 5, dans laquelle le deuxième élément d'arrêt (6b-6d, 60b-60d) est déplacé derrière le premier récipient.

7. Procédé de groupage de récipients dans une machine d'emballage, présentant les étapes ci-après :
- amenée, les uns après les autres, de récipients (5) en direction d'un poste de travail (20), à une vitesse prédéterminée, et détection de l'amenée des récipients (5) respectifs avec un élément capteur (70) ;
- immobilisation d'un premier récipient avec un premier élément d'arrêt (6a, 60a), le dispositif d'alimentation (2) continuant à amener des récipients ;
- introduction d'un deuxième élément d'arrêt (6b, 60b) dans la direction de déplacement des récipients,
**caractérisé en ce que** le deuxième élément d'arrêt est introduit directement derrière le premier récipient à un moment déterminé à partir du moment de la détection de l'amenée d'un récipient (5) et de la vitesse d'alimentation.

8. Procédé selon la revendication 7, comprenant en outre une étape d'immobilisation d'un deuxième récipient au deuxième élément d'arrêt (6b, 60b), le dispositif d'alimentation (2) continuant à amener des récipients (5).
